# EUROPEAN PATENT APPLICATION

(11) **EP 3 387 965 A1**
(43) Date of publication of application: **17.10.2018**
(21) Application number: 16872292.4
(22) Date of filing: 17.11.2016
(51) Int. Cl.: A47J 31/44

(54) **COFFEE POWDER COMPRESSING DEVICE FOR COFFEE MAKER AND COFFEE MAKER HAVING SAME**

(30) Priority: 09.12.2015 CN 201521020065 U
(71) Applicant: ELEC-TECH ZHUHAI CO., LTD., Tangjiawan Town, Xiangzhou District, Zhuhai City, Guangdong (CN)
(72) Inventor: WANG, Donglei, Zhuihai City Guangdong519000 (CN); LI, Yong, Zhuihai City Guangdong 519000 (CN); MA, Long, Zhuihai City Guangdong 519000 (CN); LIN, Tushou, Zhuihai City Guangdong 519000 (CN)
(74) Representative: Noble, Nicholas
(86) International application number: PCT/CN2016/106252
(87) International publication number: WO 2017/097100

(57) **Abstract**

Disclosed is a coffee powder compressing device for a coffee maker, comprising an accommodating chamber (11a); a filter assembly (17), the filter assembly (17) being able to be put into the accommodating chamber (11a) and be taken out of the accommodating chamber (11a) through the side opening (11b), the filter assembly (17) being provided with a cavity (12a); a movable pressing block (5), a lower end of the movable pressing block (5) being located into the top opening (11c) of the accommodating chamber (11a), and the movable pressing block (5) being able to reciprocally move between a first position with a higher height and a second position with a lower height; a first sealing ring (6), the first sealing ring (6) being disposed between the lower end of the movable pressing block (5) and the opening portion of the cavity (12a), and a brewing chamber (B) formed by the first sealing ring (6), the movable pressing block (5) and the filter assembly (17); an extrusion portion (5a) being disposed on the lower end of the movable pressing block (5), when the movable pressing block (5) is situated at the second position and the filter assembly (17) is located into the accommodating chamber (11a), the extrusion portion (5a) inserts into the cavity (12a); thereby, by means of compressing the coffee powder through the extrusion portion (5a), solving the problem that the tightness of the compressed coffee powder is difficult to be controlled and the laborious problem in the existing coffee powder pre-compressing methods.

## Description

### CROSS REFERENCE TO RELATED APPLICATIONS

The present application claims the benefit of the priority of Chinese Patent Application No. 201521020065.9, filed on December 09, 2015, entitled "Coffee powder compressing device for coffee maker and coffee maker having same", and the entire content of which is incorporated herein by reference.

### TECHNICAL FIELD

The utility model relates to a beverage preparation device, more particularly, to a coffee powder compressing device for a coffee maker and a coffee maker having same.

### BACKGROUND

According to the existing coffee makers, the coffee powder needed to be brewed are mainly pre-compressed manually or by means of an additional device, and then the pre-compressed coffee powder will be transferred into the coffee maker to make coffee drink. The present operation method has two defects: one defect is that the tightness of the compressed coffee powder is difficult to control when the coffee powder is compressed manually, thus it is hard to brew a coffee drink with consistent quality; the second defect is that the pre-compressed coffee powder should be spun into the machine manually, so as to seal the coffee powder, which is quite laborious.

### SUMMARY

In view of the situation in the prior art mentioned above, a coffee powder compressing device for a coffee maker and a coffee maker having same are provided in the utility model, which solves the problem that the tightness of the compressed coffee powder is difficult to be controlled and the laborious problem when adopting the existing coffee powder pre-compressing methods.

In order to solve the technical problem above, the utility model provides a coffee powder compressing device for a coffee maker, including:
an accommodating chamber, the accommodating chamber being provided with a side opening at a sidewall of the accommodating chamber and a top opening at a top of the accommodating chamber;
a filter assembly, the filter assembly being able to be put into the accommodating chamber and be taken out of the accommodating chamber through the side opening, the filter assembly being provided with a cavity configured to contain coffee powder;
a movable pressing block, a lower end of the movable pressing block being located into the top opening of the accommodating chamber, and the movable pressing block being able to reciprocally move between a first position and a second position, when the movable pressing block is situated at the second position, and the filter assembly is located into the accommodating chamber, an opening end of the cavity is sealed by the lower end of the movable pressing block;
a first sealing ring, the first sealing ring being disposed between the lower end of the movable pressing block and the opening end of the cavity, and a brewing chamber being formed by the first sealing ring, the movable pressing block and the filter assembly;
an extrusion portion protruding downwards is disposed on the lower end of the movable pressing block, when the movable pressing block is situated at the second position and the filter assembly is located into the accommodating chamber, the extrusion portion inserts into the cavity.

In one embodiment, when the movable pressing block is situated at the second position and the filter assembly is located into the accommodating chamber, a distance between a lower end surface of the extrusion portion and a surface of the opening end of the cavity ranges from 5 mm to 10 mm.

In one embodiment, the first sealing ring is fixed at the lower end of the movable pressing block, a limiting step for matching up with the opening end of the cavity is disposed on a periphery surface of the first sealing ring.

In one embodiment, a blocking net is disposed below the extrusion portion, a surrounding edge of the blocking net is fixed on the lower end of the sealing ring.

In one embodiment, the coffee powder compressing device further comprises a powder scraper blade, the powder scraper blade is disposed at a top of the side opening, the powder scraper blade is provided with at least one powder scraper surface traversing through the side opening for scraping the coffee powder.

In one embodiment, the powder scraper blade and the sidewall of the accommodating chamber is integrally formed, or the powder scraper blade is an individual component, the powder scraper blade is fixed on a sidewall of the accommodating chamber.

In one embodiment, sliding grooves extending along the direction for inserting or taking out the filter assembly are respectively disposed on two opposite inner walls of the accommodating chamber, flanges are disposed on the two sides of the filter assembly respectively to engage with the sliding grooves.

In one embodiment, the filter assembly includes a filter main body, a filter plate and a pressure boosting mechanism, the filter main body is provided with a cavity and a coffee outlet, a coffee flow exit is disposed on the underside of the cavity, the filter plate is disposed on the bottom of the cavity, the pressure boosting mechanism is disposed between the coffee flow exit and the coffee outlet.

In one embodiment, the movable pressing block is driven by a hydraulic driving device or an electro-mechanical driving device.

A coffee maker is provided in the utility model, which includes a coffee powder compressing device for the coffee maker defined in any one of the above-mentioned embodiments.

According to the coffee powder compressing device for a coffee maker and a coffee maker having same provided by the present utility model, since an extrusion portion protruding downwards is disposed at the lower end of the movable pressing block, when the movable pressing block is situated at the second position and the filter assembly is located into the accommodating chamber, the extrusion portion extends into the cavity to compress the coffee powder, thereby solving the problem that the tightness of the compressed coffee powder is difficult to be controlled and the laborious problem in the existing coffee powder pre-compressing methods .

The beneficial effects of additional technical features of the utility model will be described in the detailed description of disclosed embodiment of the description.

### BRIEF DESCRIPTION OF DRAWINGS

FIG. 1 is a three-dimensional structural schematic view of a coffee powder compressing device for a coffee maker according to one embodiment of the present utility model;
FIG. 2 is an exploded view of a coffee powder compressing device for a coffee maker according to one embodiment of the present utility model;
FIG. 3 is a section view of the coffee powder compressing device for a coffee maker when the movable pressing block shown in FIG.2 is situated at a first position;
FIG. 4 is a section view of the coffee powder compressing device for a coffee maker when the movable pressing block shown in FIG.2 is situated at a second position;
FIG. 5 is a cutaway structural schematic view illustrating a filter assembly of a coffee powder compressing device for a coffee maker according to one embodiment of the present utility model;
FIG. 6 illustrates an operation system according to one embodiment of the present utility model, wherein the movable pressing block of the coffee powder compressing device for a coffee maker is driven by a hydraulic driving device;
FIG. 7 illustrates an operation system according to one embodiment of the present utility model, wherein the movable pressing block of the coffee powder compressing device for a coffee maker is driven by an electro-mechanical driving device.

Description of the reference signs in the figures: 2- inflow water head; 3-sealing member; 4- sealing member; 5-movable pressing block; 5a-extrusion portion; 51- water inlet; 6-first sealing ring; 8-spring; 9-support frame for movable pressing block; 10-powder scraper blade; 11-support frame for filter assembly; 11a- accommodating chamber; 11b-side opening; 11c-top opening; lid-sliding groove; 12- filter main body; 12a-cavity; 12b- coffee flow exit; 12c- coffee outlet; 12d-flange; 13-filter plate; 14-second sealing ring; 15-block; 16-spring; 17-filter assembly; 18- electro-mechanical device; 19- pump; 20- boiler; 21-pipe system; 22- hydraulic control device; 23-unidirectional valve; 30-blocking net.

### DETAILED DESCRIPTION OF DISCLOSED EMBODIMENTS

The present utility model will be described in more details with reference to the accompanying figures and embodiments. It should be noted that various embodiments and the features thereof can be combined with each other under the condition of no conflict.

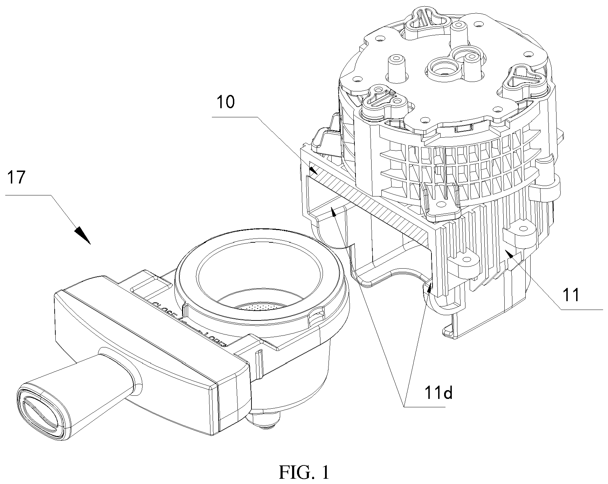

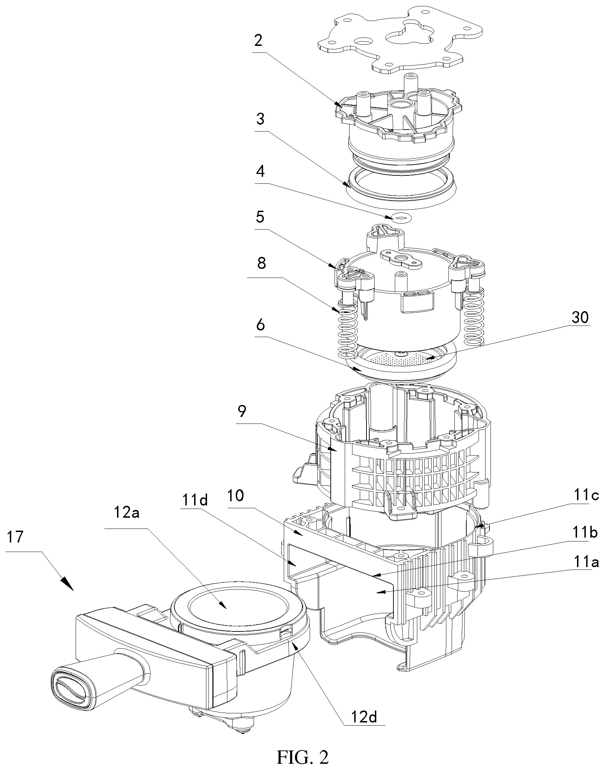

As shown in FIG. 1 to FIG. 5, a coffee powder compressing device for a coffee maker according to one embodiment of the present utility model includes a support frame for a filter assembly 17 fixed on the body of the coffee maker, a filter assembly 17, a movable pressing block 5 and a first sealing ring 6. Wherein, the support frame for filter assembly 17 is provided with an accommodating chamber 11a, the accommodating chamber 11a is provided with a side opening 11b at a sidewall of the accommodating chamber and a top opening 11c at the top of the accommodating chamber, the filter assembly 17 may be inserted into or taken out of the accommodating chamber 11a through the side opening 11b. Preferably, sliding grooves 11d extending along the direction for inserting or taking out the filter assembly 17 are respectively disposed on two opposite inner sidewalls of the accommodating chamber 11a, which is convenient for inserting and positioning the filter assembly 17. Preferably, a powder scraper blade 10 is disposed on a top of the side opening 11b, the powder scraper blade 10 is provided with at least one powder scraper surface for scraping coffee powder. When the filter assembly 17 is inserted into the accommodating chamber 11a, the excess coffee powder can be removed by the powder scraper surface of the powder scraper blade 10. The powder scraper blade 10 and the sidewall of the accommodating chamber 11a are integrally formed, or the powder scraper blade 10 is an individual component, the powder scraper blade 10 is fixed on the sidewall of the accommodating chamber 11a.

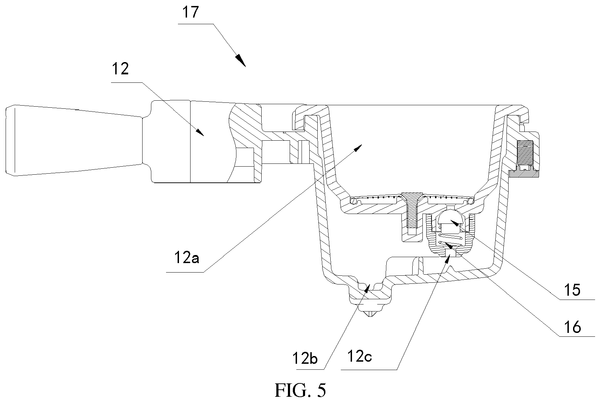

Referring to FIG. 5, the filter assembly 17 in the present embodiment includes a filter main body 12, a filter plate 13, a second sealing ring 14 and a pressure boosting mechanism. Wherein, the filter main body 12 is provided with a cavity 12a and a coffee flow exit 12b, a coffee outlet 12c is disposed on the underside of the cavity 12a, a filter plate 13 is placed at the bottom of the cavity 12a, a second sealing ring 14 is located , the pressure boosting mechanism is disposed between the coffee outlet 12c and the coffee flow exit 12b , between the filter plate 13 and the bottom of the cavity 12a, the filter plate 13 is configured to block the coffee powder, so as to avoid the coffee powder blocking the pressure boosting mechanism during the process for discharging the coffee fluid. The pressure boosting mechanism is disposed between the coffee outlet 12c and the coffee flow exit 12b, which is configured to boost the pressure in the brewing cavity B. The pressure boosting mechanism may use a throttle hole by means of the flow restriction of the orifice or a valve. In one embodiment, the valve for the pressure boosting mechanism may include a block 15 and a spring 16.

Continuing to refer to FIG.1 to FIG. 4, the movable pressing block 5 is installed on a support frame for movable pressing block 9 fixed above the support frame for filter assembly 11, the lower end of movable pressing block 5 is situated into the top opening of the accommodating chamber 11a, the movable pressing block 5 is able to move upwardly and downwardly between a first position with a greater height and a second position with a lower height, and an extrusion portion 5a protruding downwards is disposed on the lower end of the movable pressing block 5. The first sealing ring 6 is fixed at the lower end of the movable pressing block 5, a limiting step configured to match up with the opening end of the cavity 12a is disposed on the peripheral surface of the first sealing ring 6. Certainly, the first sealing ring 6 may also be disposed at the opening end of the cavity 12a.

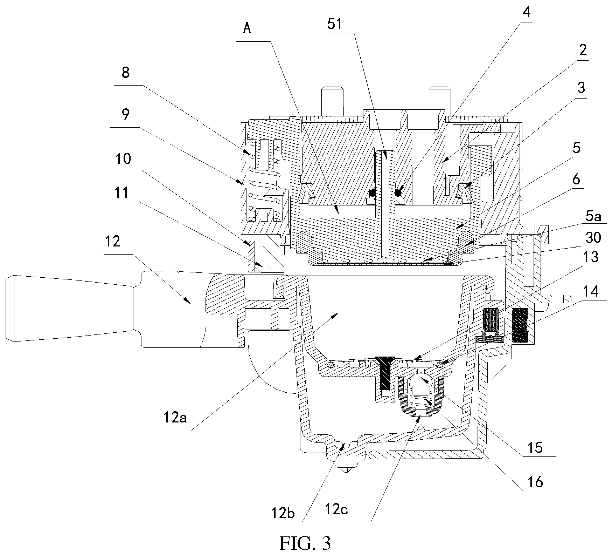

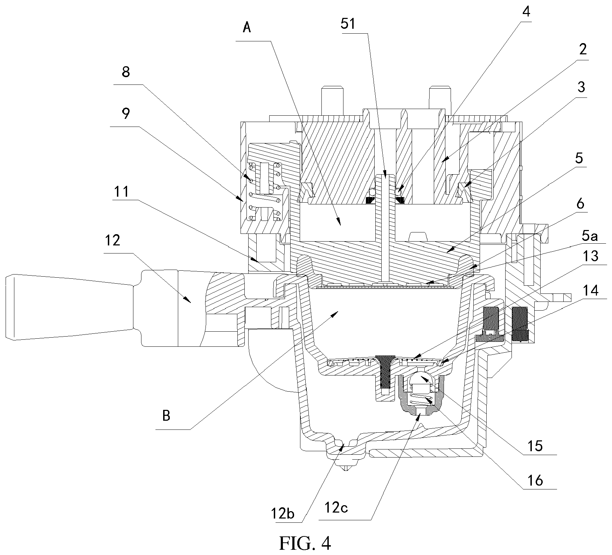

Referring to FIG. 3, when the movable pressing block 5 is situated at the first position, the filter assembly 17 may be freely taken out of and put into the accommodating chamber 11a. Referring to FIG. 4, when the movable pressing block 5 driven by a driving device has moved to the second position from the first position, and the filter assembly 17 is situated into the accommodating chamber 11a, a brewing cavity B is formed by the movable pressing block 5, the first sealing ring 6 and the filter assembly 17. Since an extrusion portion 5a protruding downwards is disposed on the lower end of the movable pressing block 5, the extrusion portion may insert into the cavity 12a to compress the coffee powder, which solves the problem that the tightness level of the coffee powder is difficult to control and the laborious problem in the existing coffee powder pre-compressing methods. Preferably, when the movable pressing block 5 is situated at the second position and the filter assembly 17 is located into the accommodating chamber 11a, the distance between the lower end surface of the extrusion portion 5a and surface of the opening portion of the cavity 12a ranges from 5 mm to 10 mm.

In one embodiment, a water inlet 51 extending along the axial direction of the movable pressing block 5 is disposed on the movable pressing block 5. A blocking net 30 is disposed below the extrusion portion 5a, the surrounding edges of blocking net 30 are fixed at the lower end of the first sealing ring 6, and the coffee powder are prevented from accessing into the water inlet 51 by the blocking net 30.

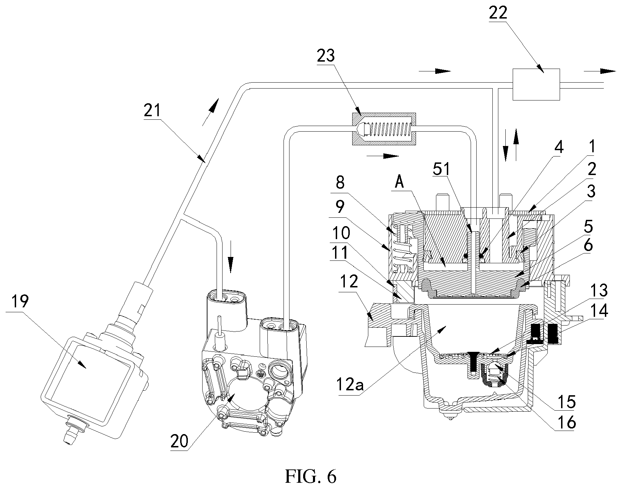

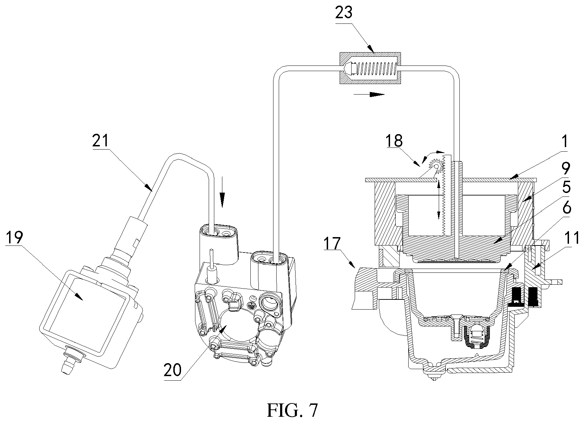

The driving device for driving the movable pressing block 5 may be a hydraulic driving device. Referring to FIG. 6, the movable pressing block 5 and the inflow water head 2 form a hydraulic chamber A by means of a sealing member 3 and a sealing member 4. The coffee maker includes a pump 19, a boiler 20, a pipe system 21 and a hydraulic control device 22 and a unidirectional valve 23, when the pump is in operation, the produced pressure water may flow into the hydraulic chamber A through the pipe system to drive the movable pressing block 5 to compress the coffee powder. The movable pressing block 5 will stop moving after moving to a compressed position, then the pressure in the water pipe system will increase. When the pressure begins to be greater than the preset pressure for the unidirectional valve 23, the unidirectional valve 23 is switched to a through flow state, then the hot water may access into brewing chamber B through the water inlet 51 for making coffee drink. After releasing the fluid in the hydraulic chamber A, the movable pressing block 5 may return to its initial position under the thrusting force of the spring 8. In other embodiment, the driving device for driving the movable pressing block 5 may be an electro-mechanical driving device. Referring to FIG. 7, the movable pressing block 5 is driven by an electro-mechanical driving device, after the movable pressing block 5 is moving to the compressed position, then the pump 19 begins to operate to brew coffee drink.

The working principle of the coffee powder compressing device for the coffee maker in the embodiment of present utility model is as follows:
First step, adding enough coffee powder into the cavity 12a of the filter assembly 17, and then inserting the filter assembly 17 to a brewing position along the sliding grooves 11d, and removing the excess coffee powder by the powder scraper blade.
Second step, driving the movable pressing block 5 moving towards the support frame for filter assembly 11 by a hydraulic driving device or an electro-mechanical driving device, so as to compress the coffee powder automatically. Meanwhile, a brewing cavity B is formed by the movable pressing block 5, the first sealing ring 6 and the filter assembly 17.
Third step, injecting pressurized hot water flow into the water inlet 51, the pressurized hot water flow may enter into the brewing chamber B for making the coffee drink, the pressure boosting mechanism disposed between the brewing chamber B and the coffee flow exit is configured to increase the pressure for brewing coffee.
Fourth step, stopping operating the pump after completing to make coffee drink, and getting through the pipe system and releasing the pressure in the hydraulic chamber A by the hydraulic control device, then the movable pressing block 5 may return to its initial position under the thrusting force by the spring, or the movable pressing block 5 may return to its initial position driven by a driving device. Finally, taking out the filter assembly 17, and discarding the coffee powder, then the whole process for making coffee drink is finished.

What described above are only some embodiments of the present utility model, which is more specific and detailed, but it shall be understood that they are not intended to limit the scope of the present utility model. It should be understood by those skilled in the art that various modifications and replacements may be made therein without departing from the theory of the present utility model, which should also be seen in the scope of the present utility model.

## Claims

1. A coffee powder compressing device for a coffee maker, comprising:
an accommodating chamber (11a), the accommodating chamber (11a) being provided with a side opening (11b) at a sidewall and a top opening (11c) at a top;
a filter assembly (17), the filter assembly (17) being able to be put into the accommodating chamber (11a) and be taken out of the accommodating chamber (11a) through the side opening (11b), the filter assembly (17) being provided with a cavity (12a) for loading coffee powder;
a movable pressing block (5), a lower end of the movable pressing block (5) being located into the top opening (11c) of the accommodating chamber (11a), and the movable pressing block (5) being able to reciprocally move between a first position and a second position, when the movable pressing block (5) is situated at the second position, and the filter assembly (17) is located into the accommodating chamber (11a), an opening end of the cavity (12a) is sealed by the lower end of the movable pressing block (5);
a first sealing ring (6), the first sealing ring (6) being disposed between the lower end of the movable pressing block (5) and the opening end of the cavity (12a), and a brewing chamber (B) being formed by the first sealing ring (6), the movable pressing block (5) and the filter assembly (17); **characterized in that**,
an extrusion portion (5a) protruding downwards is disposed on the lower end of the movable pressing block (5), when the movable pressing block (5) is situated at the second position and the filter assembly (17) is located into the accommodating chamber (11a), the extrusion portion (5a) inserts into the cavity (12a).

2. The coffee powder compressing device for a coffee maker of claim 1, **characterized in that**, when the movable pressing block (5) is situated at the second position and the filter assembly (17) is located into the accommodating chamber (11a), a distance between a lower end surface of the extrusion portion (5a) and a surface of the opening end of the cavity (12a) ranges from 5 mm to 10 mm.

3. The coffee powder compressing device for a coffee maker of claim 1, **characterized in that**, the first sealing ring (6) is fixed at the lower end of the movable pressing block (5), a limiting step for matching up with the opening end of the cavity (12a) is disposed on a periphery surface of the first sealing ring (6).

4. The coffee powder compressing device for a coffee maker of claim 1, **characterized in that**, a blocking net (30) is disposed below the extrusion portion (5a), a surrounding edge of the blocking net (30) is fixed on the lower end of the sealing ring (6).

5. The coffee powder compressing device for a coffee maker of any one of claims 1 to 4, **characterized by** further comprising a powder scraper blade (10), the powder scraper blade (10) is disposed at a top of the side opening (11b), the powder scraper blade (10) is provided with at least one powder scraper surface traversing through the side opening (11b) for scraping the coffee powder.

6. The coffee powder compressing device for a coffee maker of claim 5, **characterized in that**, the powder scraper blade (10) and the sidewall of the accommodating chamber (11a) are integrally formed, or the powder scraper blade (10) is an individual component, the powder scraper blade (10) is fixed on a sidewall of the accommodating chamber (11a).

7. The coffee powder compressing device for a coffee maker of any one of claims 1 to 4, **characterized in that**, sliding grooves (11d) extending along the direction for inserting or taking out the filter assembly (17) are respectively disposed on two opposite inner walls of the accommodating chamber (11a), flanges (12d) are disposed on the two sides of the filter assembly (17) respectively to engage with the sliding grooves (11d).

8. The coffee powder compressing device for a coffee maker of any one of claims 1 to 4, **characterized in that**, the filter assembly (17) comprises a filter main body (12), a filter plate (13) and a pressure boosting mechanism, the filter main body (12) is provided with a cavity (12a) and a coffee flow exit (12b), a coffee outlet (12c) is disposed on the underside of the cavity (12a), the filter plate (13) is disposed on the bottom of the cavity (12a), the pressure boosting mechanism is disposed between the coffee outlet (12c) and the coffee flow exit (12b).

9. The coffee powder compressing device for a coffee maker of any one of claims 1 to 4, **characterized in that**, the movable pressing block (5) is driven by a hydraulic driving device or an electro-mechanical driving device.

10. A coffee maker comprising a coffee powder compressing device for the coffee maker defined in any one of claims 1 to 9.
